# EUROPÄISCHE PATENTANMELDUNG

(11) **EP 2 679 497 A1**
(43) Veröffentlichungstag der Anmeldung: **01.01.2014**
(21) Anmeldenummer: 12174306.6
(22) Anmeldetag: 29.06.2012
(51) Int. Cl.: B64D 11/06

(54) **Befestigungssystem für einen Flugzeugsitz**

(71) Anmelder: Bishop GmbH Aeronautical Engineers, 22587 Hamburg (DE)
(72) Erfinder: Bishop, Peter, 22587 Hamburg (DE)
(74) Vertreter: Glawe, Delfs, Moll

(57) **Zusammenfassung**

Die Erfindung betrifft ein Befestigungssystem für einen Flugzeugsitz. Das Befestigungssystem umfasst einen Schlitten (18) mit zwei Seitenflanken (20, 21). Erfindungsgemäß weist der Schlitten (18) eine Mehrzahl von Bohrungspaaren (22) auf, die sich fluchtend durch die beiden Seitenflanken (20, 21) hindurch erstrecken. Für jedes Bohrungspaar (22) ist ein passender Bolzen (16) vorgesehen. Mit dem erfindungsgemäßen Befestigungssystem kann ein Flugzeugsitz an einer Bodenschiene (14) eines Flugzeugs befestigt werden. Die Bodenschiene (14) kann schlank gestaltet sein, so dass Gewicht gespart wird.

## Beschreibung

Die Erfindung betrifft ein Befestigungssystem für einen Flugzeugsitz. Das Befestigungssystem umfasst einen Schlitten mit zwei Seitenflanken.

Ein solches Befestigungssystem kann dazu dienen, einen Flugzeugsitz an einer Bodenschiene zu befestigen, die mit der Bodenstruktur eines Flugzeugs verbunden ist. Der Schlitten wird dazu an dem Bein eines Flugzeugsitzes angebracht und auf die Bodenschiene aufgesetzt. Wenn der Schlitten mit geeigneten Mitteln an der Bodenschiene befestigt wird, ist eine feste Verbindung zwischen dem Flugzeugsitz und der Bodenstruktur des Flugzeugs hergestellt.

Bei bisherigen Befestigungssystemen wird der Schlitten meist von oben mit der Bodenschiene verschraubt. Die Bodenschiene ist zu diesem Zweck an ihrer Oberseite mit Bohrungen oder anderen geeigneten Befestigungsmitteln versehen, was eine beträchtliche Breite der Bodenschiene erfordert.

Der Erfindung liegt die Aufgabe zu Grunde, ein Befestigungssystem vorzustellen, mit dem Gewicht eingespart werden kann. Ausgehend vom eingangs genannten Stand der Technik wird die Aufgabe gelöst mit den Merkmalen des Anspruchs 1. Vorteilhafte Ausführungsformen finden sich in den Unteransprüchen.

Erfindungsgemäß weist der Schlitten eine Mehrzahl von Bohrungspaaren auf, die sich fluchtend durch die beiden Seitenflanken hindurch erstrecken. Für jedes Bohrungspaar ist ein passender Bolzen vorgesehen.

Zunächst werden einige Begriffe erläutert. Jedes Bohrungspaar umfasst eine Bohrung in der ersten Seitenflanke und eine Bohrung in der zweiten Seitenflanke. Die beiden Bohrungen fluchten miteinander, haben also eine gemeinsame Bohrungsachse. Ein Bolzen, der zu einem Bohrungspaar passt, ist so gestaltet, dass er in beide Bohrungen eines Bohrungspaares eingeführt werden kann. Vorzugsweise ist der Durchmesser des Bolzens so an die Bohrungen angepasst, dass er gleitend von den Bohrungen aufgenommen wird.

Zur Befestigung an der Bodenschiene wird der Schlitten so positioniert, dass jedes Bohrungspaar des Schlittens mit einer Bohrung der Bodenschiene fluchtet. Wenn die Bolzen durch die Bohrungspaare hindurch gesteckt werden, ist der Schlitten relativ zu der Bodenschiene fixiert. Ein mit dem Schlitten verbundener Flugzeugsitz wird sicher in Position gehalten.

Indem gemäß der Erfindung die Befestigung des Schlittens durch Bolzen erfolgt, die sich zwischen den Seitenflanken erstrecken, kann der obere Abschnitt der Bodenschiene als durchgehendes Schienenteil gestaltet sein, das trotz geringer Breite zur Aufnahme großer Kräfte geeignet ist. Um übermäßige lokale Belastungen der Bodenschiene zu vermeiden, wird der Schlitten nicht nur über einen, sondern über eine Mehrzahl von Bolzen an der Bodenschiene befestigt. Durch die Mehrzahl von Bolzen wird eine gleichmäßige Krafteinleitung in die Bodenschiene erreicht.

Von der Erfindung umfasst sind Ausführungsformen, bei denen der Schlitten zwei Bohrungspaare aufweist. In einer vorteilhaften Ausführungsform hat der Schlitten drei Bohrungspaare. Möglich sind auch Ausführungsformen mit mehr als drei Bohrungspaaren. Die Bohrungspaare sind in Längsrichtung betrachtet vorzugsweise äquidistant zueinander angeordnet.

Einen sicheren Halt für einen Flugzeugsitz bietet das erfindungsgemäße Befestigungssystem im Allgemeinen nur dann, wenn alle Bolzen richtig in die Bohrungspaare eingeführt und dort fixiert sind. Um die Bolzen daran zu hindern, sich unbeabsichtigt zu lösen, kann für jeden der Bolzen ein Sicherungselement vorgesehen sein.

Bei einer Inspektion des Flugzeugs kann es einen erheblichen Aufwand bedeuten, jeden einzelnen Bolzen und jedes zugehörige Sicherungselement auf korrekten Sitz zu überprüfen. Um die Überprüfung zu erleichtern, kann ein gemeinsames Sicherungselement für eine Mehrzahl von Bolzen vorgesehen sein. Anstatt der Mehrzahl von Bolzen muss dann lediglich das eine Sicherungselement auf korrekten Sitz überprüft werden.

In einer vorteilhaften Ausführungsform ist das Sicherungselement ein Sicherungsblech, das bei einer Mehrzahl von Bolzen in eine Nut eingreift. Die Nut erstreckt sich vorzugsweise in Umfangsrichtung um den Bolzen herum.

Die Bolzen können mit einem Anschlag versehen sein und die Bolzen und das Sicherungsblech so aneinander angepasst sein, dass ein Eingriff des Sicherungsblechs nur möglich ist, wenn die Bolzen bis zu dem Anschlag in den Schlitten eingeführt sind. Dies hat den Vorteil, dass die Bolzen im verriegelten Zustand auf eine definierte Position festgelegt sind.

Um zu verhindern, dass das Sicherungsblech sich unbeabsichtigt aus der Position lösen kann, in der es die Bolzen sichert, kann ein Verriegelungsmechanismus vorgesehen sein, mit dem das Sicherungsblech gegenüber dem Schlitten fixiert wird. Der Verriegelungsmechanismus ist vorzugsweise so ausgebildet, dass die richtige Verriegelung genau dann besteht, wenn das Sicherungsblech in die Bolzen eingreift, die in die Bohrungspaare eingeführt sind.

Der Verriegelungsmechanismus kann so ausgebildet sein, dass das Sicherungsblech mit einer linearen Kraft gegen den Schlitten gespannt wird. Eine solche lineare Kraft kann beispielsweise mit einer Schraube ausgeübt werden. Die lineare Kraft ist vorzugsweise senkrecht zu der Achse eines Bolzens, weiter vorzugsweise senkrecht zu einer von den Achsen der Bolzen aufgespannten Ebene ausgerichtet. Bei dieser Gestaltung kann der Verriegelungsmechanismus dazu beitragen, das Sicherungsblech in die richtige Position zu zwingen, falls dies anfangs noch nicht der Fall war.

Das Befestigungssystem kann so gestaltet werden, dass die Bolzen zunächst als separate Teile vorliegen und einzeln in die Bohrungen eingeführt werden. Das Einführen der Bolzen kann erleichtert werden, wenn die Bolzen durch ein Verbindungsstück miteinander verbunden sind. Das Verbindungsstück kann zugleich den Anschlag bilden, der am Schlitten anliegt, wenn die Bolzen richtig in die Bohrungen eingeführt sind.

Der Schlitten ist vorzugsweise mit einem Ansatzelement für ein Bein eines Flugzeugsitzes versehen. Es kann eine feste Verbindung zwischen dem Bein und dem Ansatzelement vorgesehen sein, beispielsweise indem das Bein mit dem Ansatzelement verschweißt ist. In einer vordersten Ausführungsform ist die Verbindung zwischen dem Bein und dem Ansatzelement lösbar. Beispielsweise kann das Ansatzelement mit einer Bohrung versehen sein, über die das Bein des Flugzeugsitzes mit dem Ansatzelement verschraubt werden kann. Für eine sichere Kraftübertragung ist es von Vorteil, wenn die Bohrung in dem Ansatzelement parallel zu den Bohrungspaaren der Seitenflanken ausgerichtet ist.

Das Befestigungssystem ist aufgrund der Mehrzahl der Bolzen, über die die Verbindung zu der Bodenschiene hergestellt wird, in der Lage, große Kräfte aufzunehmen. Solche großen Kräfte treten besonders an den hinteren Beinen eines Flugzeugsitzes auf, wenn das Flugzeug abrupt abgebremst wird. Diese Kräfte wirken aufgrund des hohen Schwerpunkts des Flugzeugsitzes schräg nach oben. Für die Aufnahmen dieser Kräfte ist es von Vorteil, wenn das Ansatzelement in Längsrichtung des Schlittens betrachtet außermittig angeordnet ist. Die Längsrichtung bezeichnet die Richtung, in der der Schlitten entlang der Bodenschiene verschoben werden kann. Die Mitte des Schlittens ist definiert als das Zentrum zwischen den beiden äußersten Bohrungspaaren. Vorzugsweise ist das Ansatzelement so weit außermittig angeordnet, dass die Bohrung des Ansatzelements die Mittelebene des Schlittens nicht schneidet.

Zur weiteren Stabilisierung des Ansatzelements kann ein Steg vorgesehen sein, der sich von dem Ansatzelement, das gegenüber dem Körper des Schlittens vorspringt, bis zum Körper des Schlittens erstreckt. Die Erstreckung des Stegs in Längsrichtung ist vorzugsweise so bemessen, dass der Steg die Mittelebene des Schlittens schneidet.

Die am vorderen Bein des Flugzeugsitzes auftretenden Kräfte sind regelmäßig erheblich geringer als die Kräfte am hinteren Bein des Flugzeugsitzes. Das Befestigungssystem kann deswegen einen zweiten Schlitten umfassen, der lediglich ein Bohrungspaar aufweist. Dieser zweite Schlitten wird vorzugsweise an einem vorderen Bein eines Flugzeugsitzes verwendet, während am hinteren Bein des Flugzeugsitzes ein erfindungsgemäßer Schlitten mit einer Mehrzahl von Bohrungspaaren zum Einsatz kommt.

Das erfindungsgemäße Befestigungssystem kann außerdem eine Bodenschiene umfassen, die mit einer Mehrzahl von Bohrungen in Querrichtung versehen ist. Die Bohrungen sind in Längsrichtung betrachtet vorzugsweise äquidistant zueinander. Die Breite der Schiene ist so bemessen, dass sie zwischen den Seitenflanken des Schlittens aufgenommen werden kann. Vorzugsweise stimmt der Durchmesser der Bohrungen der Schiene mit dem Durchmesser der Bohrungspaare in den Seitenflanken des Schlittens überein. In Längsrichtung ist der Abstand zweier benachbarter Bohrungen der Schiene vorzugsweise kleiner als der Abstand zweier benachbarter Bohrungspaare des Schlittens. Dadurch verteilt sich die von dem Schlitten übertragene Kraft einerseits über einen größeren Abschnitt der Schiene. Andererseits wird eine feine Einstellung der Längsposition des Schlittens ermöglicht. Der Abstand zweier benachbarter Bohrungen der Schiene kann beispielsweise zwischen 8 mm und 13 mm liegen. Die Oberseite der Schiene ist vorzugsweise als glatte Fläche ausgebildet.

Eine solche glatte Fläche kann sich fluchtend in den Kabinenboden des Flugzeugs einfügen.

Die Erfindung betrifft außerdem einen Flugzeugsitz, der über ein erfindungsgemäßes Befestigungssystem mit einer Bodenschiene eines Flugzeugs verbunden ist.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine perspektivische Ansicht eines erfindungsgemäßen Befestigungssystems mit einem Ausschnitt einer Bodenschiene und einem Ausschnitt zweier Beine eines Flugzeugsitzes;
- Fig. 2:: die Ausführungsform aus Fig. 1 in einer Ansicht von der Seite;
- Fig. 3:: die Ausführungsform aus Fig. 1 in einer Explosionsansicht;
- Fig. 4:: eine perspektivische Darstellung eines erfindungsgemäßen Befestigungssystems; und
- Fig. 5:: die Ausführungsform aus Fig. 1 in einer Ansicht von hinten.

Eine im Ausschnitt gezeigte Bodenschiene 14 ist mit einer nicht dargestellten Bodenstruktur eines Flugzeugs verbunden. Die Bodenschiene ist im oberen Bereich mit einer Vielzahl von Bohrungen 15 versehen, die sich in Querrichtung durch die Bodenschiene 14 hindurch erstrecken. Zwei benachbarte Bohrungen 15 haben einen Abstand von etwa 10 mm zueinander. Der obere Abschluss der Bodenschiene 14 wird von einem durchgehenden in sich geschlossenen Schienenteil mit einer glatten Oberfläche gebildet.

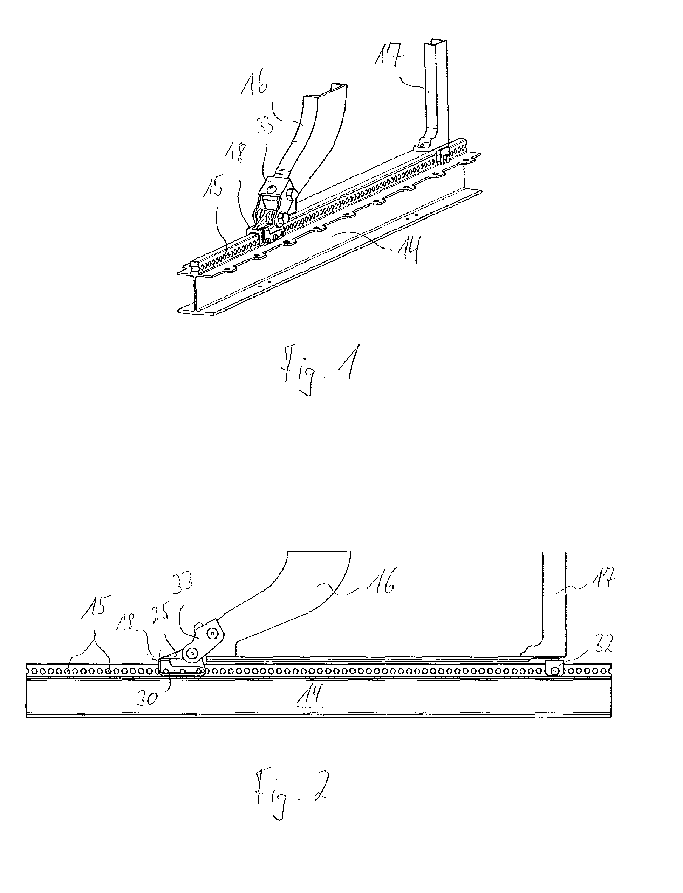

Das erfindungsgemäße Befestigungssystem ist dazu bestimmt, eine stabile Verbindung zwischen den Beinen eines Flugzeugsitzes und einer solchen Bodenschiene 14 herzustellen. In Fig. 1 sind ein hinteres Bein 16 und ein vorderes Bein 17 eines Flugzeugsitzes im Ausschnitt dargestellt.

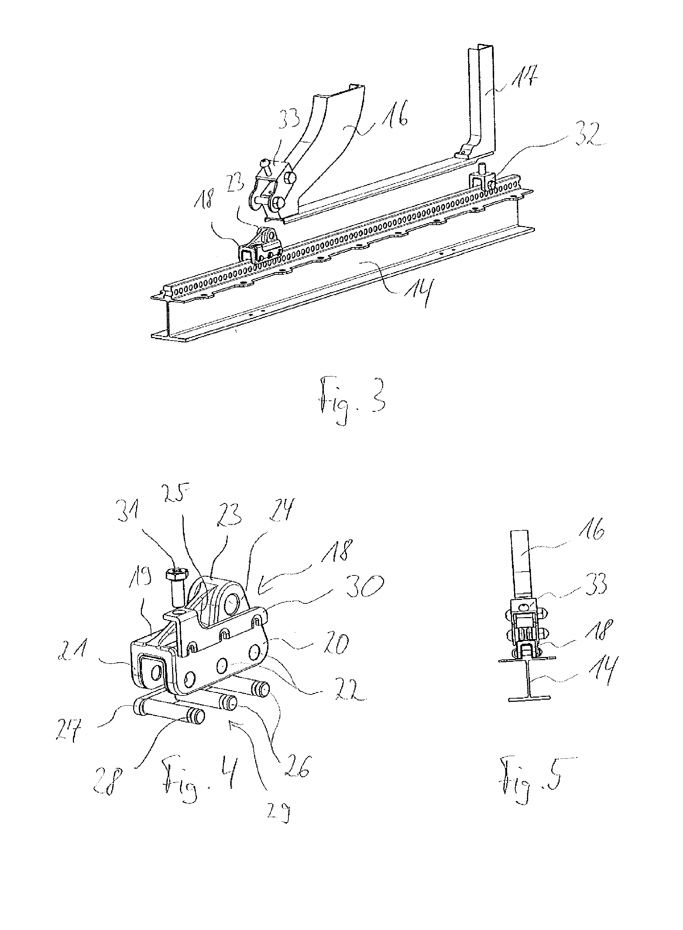

Gemäß der vergrößerten Darstellung in Fig. 4 umfasst das erfindungsgemäße Befestigungssystem einen Schlitten 18. Von einem waagerecht ausgerichteten Schlittenkörper 19 erstrecken sich zwei Seitenflanken 20, 21 nach unten. Die Seitenflanken 20, 21 schließen einen Zwischenraum zwischen sich ein, der in seiner Breite mit dem oberen Teil der Bodenschiene 14 übereinstimmt. Der Schlitten 18 kann also auf die Bodenschiene 14 aufgesetzt werden und in Längsrichtung gegenüber der Bodenschiene 14 verschoben werden.

Jede der beiden Seitenflanken 20, 21 ist mit drei Bohrungen versehen. Jede Bohrung der Seitenflanke 20 fluchtet mit einer Bohrung der Seitenflanke 21, so dass insgesamt drei Bohrungspaare 22 gebildet werden. Der Durchmesser der Bohrungen der Bohrungspaare 22 entspricht dem Durchmesser der Bohrungen 15 in der Bodenschiene 14. In Längsrichtung betrachtet ist der Abstand zwischen zwei benachbarten Bohrungspaaren 22 doppelt so groß wie der Abstand zwischen zwei benachbarten Bohrungen 15 in der Bodenschiene 14.

Von dem Schlittenkörper 19 nach oben springt ein Ansatzelement 23 vor, das mit einer Bohrung 24 in Querrichtung versehen ist. Über die Bohrung 24 kann ein Bein 16 eines Flugzeugsitzes mit dem Schlitten 18 verbunden werden. Bezogen auf die Mittelebene des Schlittens 18, die sich senkrecht durch das mittlere Bohrungspaar 22 erstreckt, ist das Ansatzelement 23 nach vorne verschoben, so dass es keine Überschneidung zwischen der Bohrung 24 und der Mittelebene gibt. Zur Stabilisierung des Ansatzelements 23 erstreckt sich ein Steg 25 von dem Ansatzelement 23 über die Mittelebene hinweg bis zum Schlittenkörper 19.

In der hier gezeigten Ausführungsform ist ein Zwischenstück 33 vorgesehen, um das Bein 16 mit dem Ansatzelement 23 zu verbinden. Das Zwischenstück 33 umgreift das Ansatzelement 23 sowie das Bein 16 und ist an beiden mit jeweils einer Schraube befestigt.

Das Befestigungssystem umfasst außerdem drei Bolzen 26, die über ein Verbindungsstück 27 starr miteinander verbunden sind, so dass sie ein Bolzenelement 29 bilden. Der Durchmesser der Bolzen 26 ist so an den Durchmesser der Bohrungspaare 22 angepasst, dass die Bolzen 26 gleitend in die Bohrungspaare 22 eingeführt werden können.

Um die Verbindung zwischen dem Schlitten 18 und der Bodenschiene 14 herzustellen, wird der Schlitten 18 so auf die Bodenschiene 14 aufgesetzt, dass jedes Bohrungspaar 22 mit einer Bohrung 15 der Bodenschiene 14 fluchtet. Das Bolzenelement 29 wird dann mit den Bolzen 26 voran in die Bohrungspaare 22 eingesteckt, bis das Verbindungsstück 27 an der Seitenflanke 21 anliegt. Die Bolzen 26 ragen dann auf der gegenüberliegenden Seite über die Seitenflanke 20 hinaus, so dass am freien Ende der Bolzen 26 ausgebildete Nuten 28 gerade frei zugänglich sind.

Um das Bolzenelement 29 in dieser Position zu sichern, ist ein Sicherungsblech 30 vorgesehen. Das Sicherungsblech 30 weist drei Aussparungen auf, die an die Nuten 28 angepasst sind. Das Sicherungsblech 30 wird von oben auf die Bolzen 26 aufgesteckt, so dass jeder Bolzen 26 mit seiner Nut 28 in einer der Aussparungen aufgenommen wird. Das Sicherungsblech 30 wird mit einer Schraube 31 in dieser Position verriegelt.

Für die Befestigung des vorderen Beins 17 des Flugzeugsitzes ist ein zweiter Schlitten 32 vorgesehen, der lediglich ein Bohrungspaar 22 aufweist. Dies reicht zur Aufnahme der am vorderen Bein 17 auftretenden Kräfte.

## Patentansprüche

1. Befestigungssystem für einen Flugzeugsitz mit einem zwei Seitenflanken (20, 21) aufweisenden Schlitten (18), **dadurch gekennzeichnet, dass** der Schlitten (18) eine Mehrzahl von Bohrungspaaren (22) aufweist, die sich fluchtend durch die beiden Seitenflanken (20, 21) hindurch erstrecken und dass für jedes Bohrungspaar (22) ein passender Bolzen (16) vorgesehen ist.

2. Befestigungssystem nach Anspruch 1, **dadurch gekennzeichnet, dass** ein gemeinsames Sicherungselement (30) für eine Mehrzahl von Bolzen (16) vorgesehen ist.

3. Befestigungssystem nach Anspruch 2, **dadurch gekennzeichnet, dass** das Sicherungselement (30) ein Sicherungsblech ist, das bei einer Mehrzahl von Bolzen (16) in eine Nut (28) eingreift.

4. Befestigungssystem nach Anspruch 2 oder 3, **dadurch gekennzeichnet, dass** die Bolzen (16) mit einem Anschlag (27) versehen sind und dass die Bolzen (16) und das Sicherungselement (30) so aneinander angepasst sind, dass ein Eingriff des Sicherungselements (30) nur möglich ist, wenn die Bolzen (16) bis zu dem Anschlag (27) in den Schlitten (18) eingeführt sind.

5. Befestigungssystem nach einem der Ansprüche 2 bis 4, **dadurch gekennzeichnet, dass** ein Verriegelungsmechanismus (31) zum Verriegeln des Sicherungselements (30) gegenüber dem Schlitten (18) vorgesehen ist.

6. Befestigungssystem nach Anspruch 5, **dadurch gekennzeichnet, dass** der Verriegelungsmechanismus (31) so ausgebildet ist, dass das Sicherungselement (30) mit einer linearen Kraft gegen den Schlitten (18) gespannt wird.

7. Befestigungssystem nach Anspruch 6, **dadurch gekennzeichnet, dass** die lineare Kraft senkrecht zur Achse eines Bolzens (16), vorzugsweise senkrecht zu einer von den Bolzen (16) aufgespannten Ebene ausgerichtet ist.

8. Befestigungssystem nach einem der Ansprüche 1 bis 7, **dadurch gekennzeichnet, dass** ein Verbindungsstück (27) vorgesehen ist, das die Mehrzahl der Bolzen (16) miteinander verbindet.

9. Befestigungssystem nach einem der Ansprüche 1 bis 8, **dadurch gekennzeichnet, dass** der Schlitten (18) ein Ansatzelement (23) zur Verbindung mit einem Bein (16) eines Flugzeugsitzes aufweist.

10. Befestigungssystem nach Anspruch 9, **dadurch gekennzeichnet, dass** das Ansatzelement (23) mit einer Bohrung (24) versehen ist, die parallel zu den Bohrungspaaren (22) der Seitenflanken (20, 21) ausgerichtet ist.

11. Befestigungssystem nach Anspruch 9 oder 10, **dadurch gekennzeichnet, dass** das Ansatzelement (23) in Längsrichtung des Schlittens (18) betrachtet außermittig angeordnet ist.

12. Befestigungssystem nach einem der Ansprüche 9 bis 11, **dadurch gekennzeichnet, dass** das Ansatzelement (23) gegenüber dem Körper (19) des Schlittens (18) vorspringt und dass ein Steg (25) vorgesehen ist, der sich von dem Ansatzelement (23) bis zu dem Körper (19) des Schlittens (18) erstreckt.

13. Befestigungssystem nach einem der Ansprüche 1 bis 12, **dadurch gekennzeichnet, dass** ein zweiter Schlitten (32) vorgesehen ist, der genau ein Bohrungspaar (22) aufweist.

14. Befestigungssystem nach einem der Ansprüche 1 bis 13, **dadurch gekennzeichnet, dass** das System eine Bodenschiene (14) mit einer Mehrzahl von Bohrungen (15) in Querrichtung umfasst, wobei die Breite der Bodenschiene (14) so bemessen ist, dass sie zwischen den Seitenflanken (20, 21) des Schlittens (18) aufgenommen werden kann.

15. Flugzeugsitz, der über ein Befestigungssystem nach einem der Ansprüche 1 bis 14 mit einer Bodenschiene (14) eines Flugzeugs verbunden ist.
